# EUROPEAN PATENT APPLICATION

(11) **EP 1 621 970 A2**
(43) Date of publication of application: **01.02.2006**
(21) Application number: 05102227.5
(22) Date of filing: 21.03.2005
(51) Int. Cl.: G06F 1/20, H05K 7/20

(54) **Electronic apparatus with cooling device**

(30) Priority: 30.07.2004 JP 2004224722
(71) Applicant: KABUSHIKI KAISHA TOSHIBA, Tokyo 105-8001 (JP)
(72) Inventor: Hata, Yukihiko Toshiba Corp., Int. Property Div., 105-8001, Tokyo (JP); Tomioka, Kentaro Toshiba Corp., Int. Property Div., 105-8001, Tokyo (JP)
(74) Representative: Henkel, Feiler & Hänzel

(57) **Abstract**

According to one embodiment, a cooling device (11) has a heat receiving member (11a) to receive heat from a heat generating element, a circulation path (15) thermally connected to the heat receiving member, the circulation path carrying coolant which the heat is transferred through the heat receiving member, a pump unit (13) to circulate the coolant inside the circulation path, a first heat radiation mechanism (14a) including a first heat radiation member thermally connected to the circulation path, and a first fan (12a) which sends air toward the first heat radiation member, and a second heat radiation mechanism (14b) including a second heat radiation member thermally connected to the circulation path, and a second fan (12b) which sends air toward the second heat radiation member.

## Description

One embodiment of the invention relates to an electronic apparatus with a cooling device in which liquid coolant is circulated for cooling a heat generating element.

Regarding a CPU or the like used in an electronic apparatus such as a portable computer, the amount of heat generated during operations is increasing, accompanying with faster speed operation and more multifunctional device. If the temperature of the CPU becomes too high, the CPU processing speed may decrease and there may be errors in the CPU operation.

In recent years, electronic apparatuses have been implemented with a cooling device in which liquid coolant (hereinafter "coolant") such as antifreeze or water, is circulated in order to increase cooling performance for the CPU. Heat recovered from the CPU is radiated outside the electronic apparatus.

The above-described cooling device comprises a heat receiving member for receiving heat from the CPU, a heat radiation member for radiating heat received by the heat receiving member, a coolant path for guiding the heat received by the heat receiving member on to the heat radiation member, and a fan for sending air to the heat radiation member and the like.

The heat radiation member comprises a conduit such as a pipe for guiding the coolant whose temperature has been increased by the heat received by the heat receiving member and a fan or metal plate or the like for reducing the temperature of the coolant which flows in the pipes.

Japanese Patent Application Publication (KOKAI) No. 2002-99356 discloses an electronic apparatus with such the cooling device. In particular, the semiconductor package in this electronic apparatus, namely the casing that houses the heat generating element, is thermally connected to a circulation path in which coolant is circulated, and the circulation path is elongated into the display unit for cooling. This electronic apparatus also includes a cooling fan.

The heat generated by the heat generating element may exceed the cooling ability of the cooling device described in the reference when the speed of a CPU is faster and faster.

According to an aspect of the present invention, there is provided a cooling device, comprising:
a heat receiving member to receive heat from a heat generating element;
a circulation path thermally coupled to the heat receiving member, the circulation path routing coolant heated by the heat receiving member;
a pump unit to circulate the coolant routed over the circulation path;
a first heat radiation mechanism having a first heat radiation member thermally coupled to the circulation path, and a first fan to send air toward the first heat radiation member; and
a second heat radiation mechanism having a second heat radiation member thermally coupled to the circulation path, and a second fan to send air toward the second heat radiation member.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view of an exemplary portable computer according to an embodiment of the present invention;
FIG. 2 is a partially cut away view in a side of the exemplary portable computer, showing an exemplary cooling device in the embodiment;
FIG. 3 is a plan view of the exemplary cooling device in the embodiment;
FIGS. 4A and 4B are exemplary diagrams showing a heat radiation mechanism including heat radiation fins and a fan connected to a coolant circulation path in the exemplary cooling device in the embodiment;
FIG. 5 is a exemplary diagram showing a positional relationship of the cooling device and a pump unit in the embodiment;
FIG. 6 is an exploded perspective view of an exemplary pump unit in the embodiment;
FIG. 7 is a plan view of an exemplary pump housing of the pump unit in the embodiment;
FIG. 8 is a perspective view of the exemplary pump unit in the embodiment;
FIG. 9 is a schematic diagram showing an exemplary configuration for mounting the cooling device in the portable computer in the embodiment; and
FIG. 10 is a schematic diagram showing an exemplary operation, flow of the coolant in the cooling device in the embodiment.

Various embodiments according to the present invention will be described hereinafter with reference to the accompanying drawings. In general, according to one embodiment of the invention, a cooling device comprises a heat receiving member to receive heat from a heat generating element, a circulation path thermally connected to the heat receiving member, the circulation path carrying coolant which the heat is transferred through the heat receiving member, a pump unit to circulate the coolant inside the circulation path, a first heat radiation mechanism including a first heat radiation member thermally connected to the circulation path, and a first fan which sends air toward the first heat radiation member, and a second heat radiation mechanism including a second heat radiation member thermally connected to the circulation path, and a second fan which sends air toward the second heat radiation member.

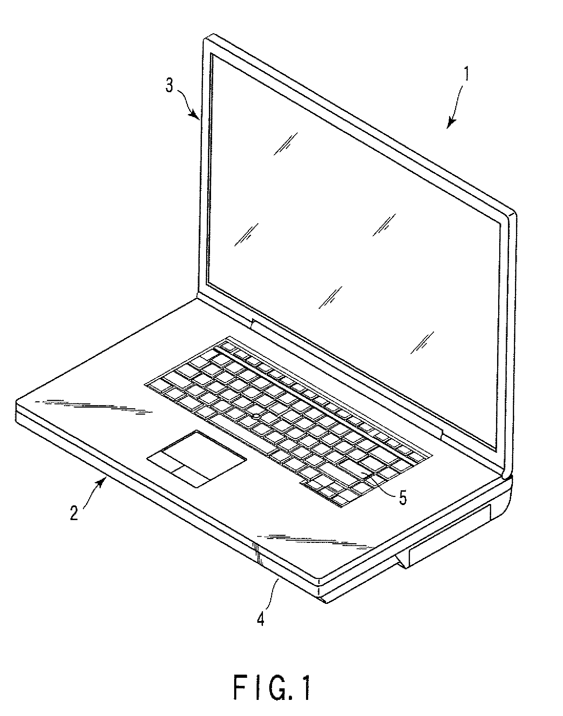

FIG. 1 shows a portable computer 1 as an electronic apparatus to which an embodiment of this invention is applied. The portable computer 1 comprises a body unit 2 and a display unit 3.

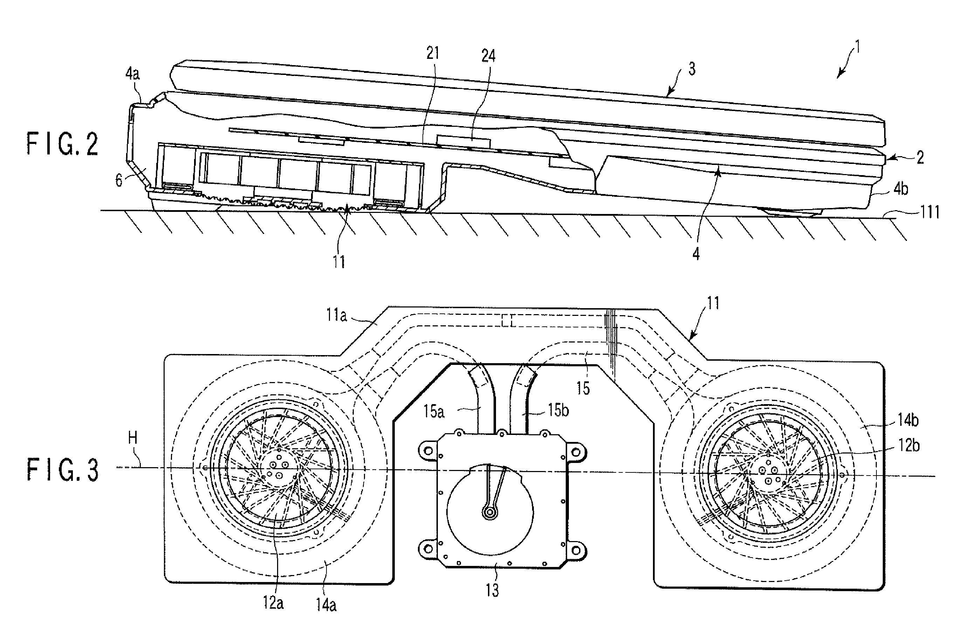

The body unit 2 has a casing 4 that is formed in a flat, box-configuration. A keyboard 5, which is used for inputting numbers and letters, is provided at a prescribed position exposed on the casing 4. The casing 4 may, for example, be made of a metallic material such as a magnesium alloy. The cooling device 11, which is described hereinafter using FIGS. 2 and 3, is provided at a prescribed position inside the casing 4.

FIG. 2 shows the portable computer 1 placed on a surface 111 such as a desk that is a substantially flat surface. A side portion in the casing 4 of the portable computer 1 is cut away in FIG. 2, and a fan of the cooling device 11 may be seen through the cut portion.

As shown in FIG. 2, the casing 4 has a prescribed incline such that the rear edge 4a of the casing 4 is positioned higher than the front edge 4b of the casing 4. To open and close the display unit 3, a user operates a front edge side of the display unit 3, right side in FIG. 2, and rotates the display unit 3 about an axis of hinge (not shown) arranged in a rear edge side of the display unit 3, left side in FIG. 2.

The cooling device 11 is accommodated at the rear edge 4a side of the casing 4. In FIG. 2, a part of a fan of the cooling device 11 and a part of a radiator that is constructed integrally with the fan is exposed. A cooling part cover 6 which is formed independently from the casing 4 covers the cooling device 11 and around it. The cooling part cover 6 also functions as a leg for causing the above-described incline of the casing 4.

FIG. 3 shows the cooling device 11 partly shown in FIG. 2 when viewed from the top. As shown in FIG. 3, the cooling device 11 comprises a pump unit 13 positioned between the first and second fans 12a and 12b that are disposed so as to be substantially horizontally symmetrical when viewed from the top. At least a part of the exterior of the pump unit 13 is disposed at a position which crosses a hypothetical line H which crosses both the central axis of the first and second fans 12a and 12b, when the pump unit 13 is viewed from the top.

First and second heat radiation fins 14a and 14b are heat radiation members to radiate heat transferred, and arranged around each of the first fans and second fans 12a and 12b respectively. Placement of the fans 12a and 12b substantially horizontally symmetrical to each other, in the case where a plurality of fans is used in the cooling device of the electronic apparatus, contributes to drowning vibration generated from the rotation of each of the fans 12a, 12b and controls undesired resonance in the casing 4.

Each of the first and second heat radiation fins 14a and 14b is thermally connected to a coolant circulation path 15 that is a conduit and in which liquid coolant (simply "coolant" hereinafter) flows. The pump unit 13 connects to the coolant circulation path 15 to circulate the coolant. The coolant circulation path 15 has two parts, namely a first flow path connected to the first heat radiation fins 14a and a second flow path connected to the second heat radiation fins 14b.

The coolant circulation path 15 may be formed of a pipe or tube with high thermal conductivity and made of copper, brass, or stainless steel with a cross-section configuration that may be circular or non-circular. It is contemplated that a flexible tube such a rubber tube or the like may also be used. The coolant may be antifreeze or water. Under the circumstances described above, radiation of heat conveyed by the coolant through the first and second heat radiation fins 14a and 14b may be performed efficiently.

A mount base 11a, which is a supporting member, is a metal plate forming a vital portion of the cooling device 11 and supports the first and second heat radiation fins 14a and 14b and the coolant circulation path 15, for example, soldered or molded thereon.

A substance such as silicon grease or the like may be provided between the first and second heat radiation fins 14a and 14b, the coolant circulation path 15, and the mount base 11a if necessary, in order to thermally improve the connection efficiency between both parts. It is to be noted that in the case where the coolant circulation path 15 is a tube made of rubber or the like, mounting attachments and the like may be used for mounting.

Connecting portions 15a and 15b connect the pump unit 13 to a part of the coolant circulation path 15, and are separated from the mount base 11a. In more detail, the connecting portion 15a connects discharge portion of the pump unit 13 to the coolant circulation path 15, and the connecting portion 15b connects suction portion of the pump unit 13 to the coolant circulation path 15.

The connecting portions 15a and 15b may be covered by a tube having portions made of rubber or a rubber tube having a belt-like piece of metal at the outer periphery, and a flexible tube or the like which may deform into a suitably selected configuration may be used.

Accordingly, comparing the positions of two fans 12a and 12b of the cooling device 11, the pump unit 13 may be disposed at a more suitable position that corresponds to the position of the heat generating element.

By being deformable the connecting portions 15a and 15b for connection between the pump unit 13 and the coolant circulation path 15, it may be easier to separate the pump unit 13 of the cooling device 11 from the heat generating element such as central processing unit (hereinafter "CPU") or TC chip, namely such structure contributes to improve efficiency of disassembly and/or replacement.

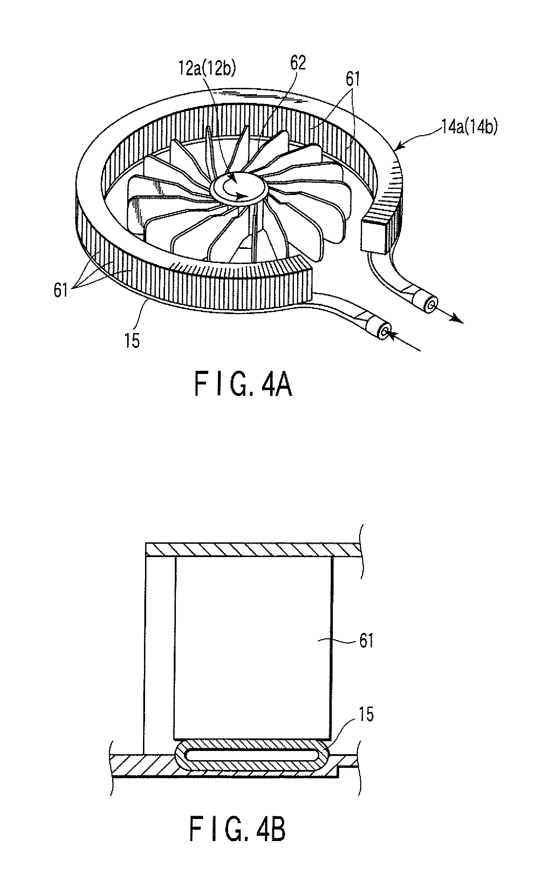

FIG. 4 illustrates one of heat radiation mechanisms of the cooling device 11, which includes one of the first and second heat radiation fins 14a (or 14b), and one of the first and second cooling fans 12a (or 12b) which are respectively positioned and linked with the heat radiation fins 14a (or 14b). The structure of both of the heat radiation mechanisms, combination of the first heat radiation fins 14a and the first fan 12a and combination of the second heat radiation fins 14b and the second fan 12b, are substantially the same and thus only one which is combination of the first heat radiation fin 14a and the first fan 12a, will be described.

The first heat radiation fins 14a have a heat radiating body 61 that is formed in an arc-like or circular configuration from a member having high thermal conductivity such as copper or aluminum. An impeller 62 for generating airflow is positioned substantially at the center of the arc or circle of the heat radiating body 61, as the first fans 12a. Each of the impellers 62 is rotated in a prescribed direction by a motor portion that is not described in detail. In both the heat radiation mechanism, the heat radiating body 61 and the impeller 62 respectively may have the same configuration or may have a symmetrical configuration.

The coolant circulation path 15 is in the vicinity of a prescribed location on the heat radiating body 61 or in contact with it such as the arc-like configuration or the cylindrical portion of the circular configuration. FIG. 4b shows the coolant circulation path 15 when viewed from the lateral surface direction. In the region where the coolant circulation path 15 physically contacts or comes close to the heat radiating body 61, the coolant circulation path 15 has a flat cross-section along the width of the heat radiating body 61, length in the diametrical direction. Also, the coolant circulation path 15 and the heat radiating body 61 are preferably thermally connected by soldering or molding.

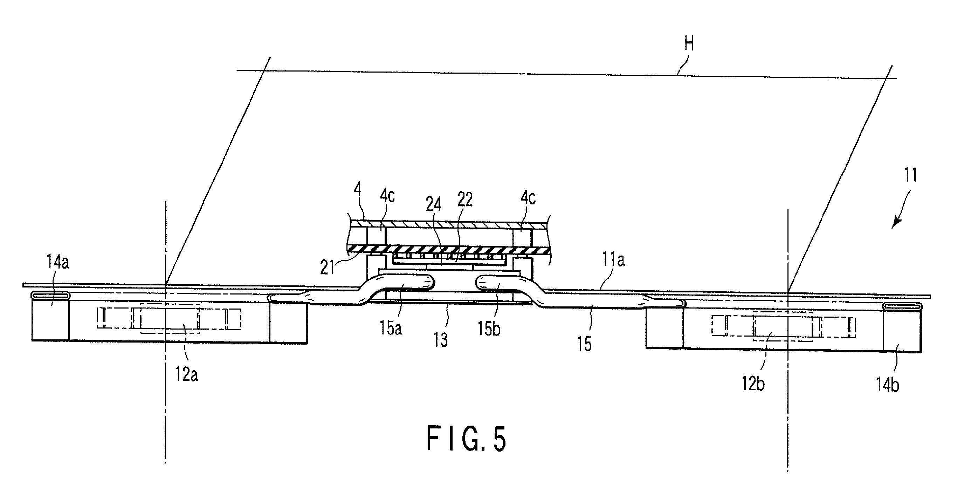

As shown in FIG. 5, the pump unit 13 is thermally connected with a CPU 22, namely an IC chip 24 of the CPU 22, which is substantially disposed at the center on the top of a printed circuit board 21, via silicone grease 25, or a heat transferring sheet. The CPU 22 is a main control circuit and also a heat generating element which is provided on the print circuit board 21 arranged in the casing 4.

The pump unit 13 and the first and second fans 12a and 12b are, depending on the IC chip 24's position, offset by a predetermined amount when viewed from a direction in an orthogonal direction to the plane defined by the hypothetical line H which crosses the central axis of each of the fans 12a and 12b and the axis line of the fans 12a and 12b. That is, the pump unit 13 may be provided at a position, which corresponds to the surface at the opposite side of the fans 12a and 12b which are positioned at one surface of the mount base 11a.

Due to increased processing speed and performance of multiple functions, the IC chip 24 generates a large amount of heat during operation and the temperature increases rapidly. Thus, in order for the IC chip 24 to operate continuously and stably, effective cooling, namely effective heat radiation is needed. The cooling method may be air cooling, but as the amount of heat generated increases, radiating heat carried via a coolant, which is circulated, is advantageous in obtaining highly effective cooling.

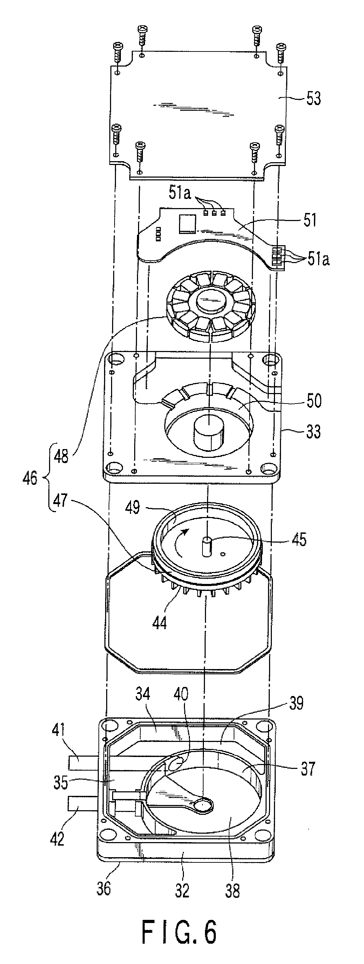

With reference to FIGS. 6 through 8, the pump unit 13 will be described. The pump unit 13 comprises a pump housing 31 that functions as a heat receiving member for receiving heat generated by the CPU 22 which is a part of the IC chip 24. The pump housing 31 comprises a housing body 32 and a top cover 33.

The housing body 32 has a flat box-like configuration of a size that may cover the entire IC chip 24, and is formed of a material having high thermal conductivity such as an aluminum alloy.

The housing body 32 has a recess portion 34 that is open at the side opposite the side where the IC chip 24 contacts the housing body 32. The lower surface of bottom wall 35 in FIG. 6, namely the lower outer surface 36 of the housing body 32, is in contact with the IC chip 24 via silicone grease 25 or the like. Therefore, the lower outer surface 36 functions as a heat receiving member that may receive much of the heat generated by the IC chip 24. The top cover 33 may be made of a resin and should be resistant to the coolant, and should tightly seal the recess portion 34 so as to prevent from leakage of the coolant when the opening end thereof comes in contact with the recess portion 34.

A ring-shaped partition wall 37 partitions the inside of the pump housing 31 into a pump chamber 38 and a reserve tank 39.

The reserve tank 39 is positioned around the pump chamber 38 for collecting coolant. The partition wall 37 is formed so as to be substantially perpendicular to the bottom wall 35 of the housing body 32. A channel 40, which makes movement of the coolant between the pump chamber 38 and the reserve tank 39 possible, is formed in the partition wall 37.

The housing body 32 has a suction tube 41 and a discharge tube 42 which are integrally formed and directed outwards with respect to the recess portion 34. One end of the suction tube 41 connects to the connecting portion 15b of FIG. 3, and one end of the discharge tube 42 connects to the connecting portion 15a of FIG. 3.

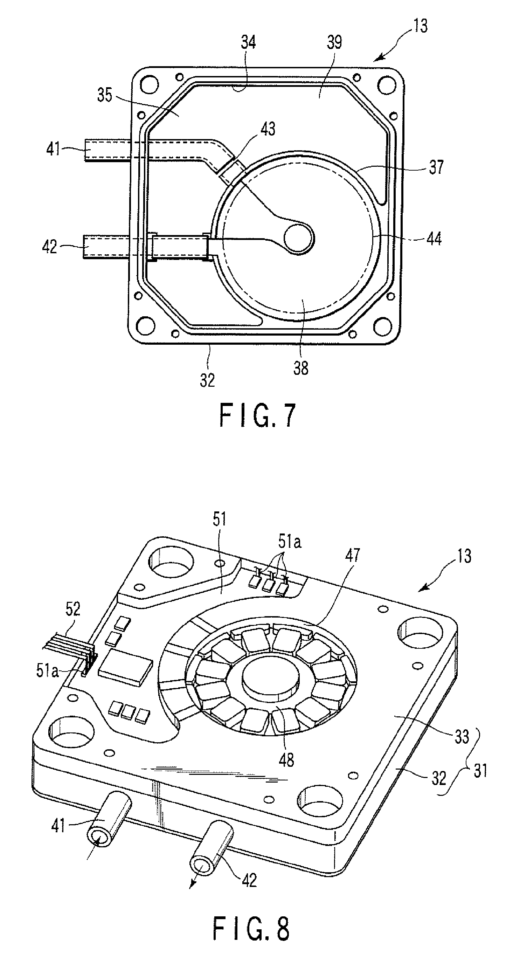

The other end of the suction tube 41 is connected to the inside of the reserve tank 39, and opposes the channel 40. As shown in FIG. 7, a space 43 for vapor-liquid separation is formed between the downstream end of the suction tube 41 and the channel 40. When the orientation of the pump housing 31 changes, when the angle of the set location of the portable computer 1 changes, or when the portable computer 1 is being carried, the space 43 is positioned under the liquid surface of the coolant that is always stored in the reserve tank 39.

The other end of the discharge tube 42 is connected to the pump chamber 38 via the partition wall 37.

A disc-shaped impeller 44 is accommodated in the pump chamber 38 of the pump housing 31. The impeller 44 has a rotation axle 45 in the rotation center portion. The rotation axle 45 rotates between the bottom wall surface 35 of the housing body 32 and the top cover 33.

The pump housing 31 includes a motor 46 for rotating the impeller 44. The motor 46 comprises a rotor 47 and a stator 48.

The rotor 47 is fixed at a predetermined position on the impeller 44, and in the case of the example in FIG. 6 it is fixed above the impeller 44 so as to be coaxial with respect to the impeller 44, and is accommodated in the pump chamber 38 along with the impeller 44. A magnet 49, which is formed such that a plurality of N poles and a plurality of S poles intersect, is fixed inside the rotor 47. That is, the impeller 44, the rotor 47 and the magnet 49 may rotate about the rotation axle 45.

The stator 48 is formed at a predetermined position on the top cover 33, and is positioned in the specified recess 50 so as to be capable of coming close to the magnet 49 of the rotor 47. Thus, the stator 48 is positioned inside the rotor 47 so as to be coaxial with the rotor 47. That is, the external portion in the circumferential direction of the stator 48 opposes the magnet 49 when provided via the recess 50 of the top cover 33. Because the rotor 47, the stator 48 and the magnet 49 are arranged in this manner, an outer ring rotation type motor 46 may be defined. In this embodiment, the motor 46 and the pump chamber 38 are formed so as to be offset from the center of the pump unit 13.

A drive circuit board 51 for operating the motor 46 is arranged above the top cover 33. The drive circuit board 51 is capable of supplying a predetermined drive current to the stator 48. When the portable computer is turned on, a current of a prescribed size is supplied to the stator 48. This causes the stator 48 to generate a rotating magnetic field in the circumferential direction of the stator 48, and then attraction and repulsion are alternately repeated between the stator 48 and the magnet 49 of the rotor 47. Consequently, this generates torque along the circumferential direction of the rotor 47 between the stator 48 and the magnet 49, and the impeller 44 rotates in a prescribed direction.

In the drive circuit board 51, the power source line 52, which supplies current for operating the motor 46 connects to the position of the rotation center of the motor 46. This is a position that is separated from the rotation shaft 45 of the impeller 44 as well as the suction tube 41 and the discharge tube 42, and that is offset from the center of the pump unit 13. That is, when a prescribed current is supplied to the drive circuit board 51, the current supply portion 51a is positioned at a position or the vicinity thereof, which is the furthest distance away from regions which the coolant contact, such as the pump chamber 38, the reserve tank 39 and the suction tube 41 and the discharge tube 42 of the pump unit 13, in order to increase insulation. Thus, insulation of the pump unit 13, which circulates liquid coolant, increases user safety.

A back plate 53 is fixed by a plurality of fastening elements (e.g., screws) to the top cover 33. The back plate 53 shields the stator 48 and the drive circuit board 51.

Referring to FIG. 5 once again, the pump unit 13 is positioned on the printed circuit board 21 so as to cover the entire region of the top portion of the IC chip 24 of the CPU 22. The pump unit 13 is fixed along with the print circuit board 21 to boss portions 4c formed in advance which are directed from the casing 4 toward positions corresponding to the four corners of the pump housing 31 of FIG. 8.

In this manner, as shown in FIGS. 5 and 6, the pump unit 13 and the print circuit board 21 are fixed at a prescribed position on the casing 4, and the outer surface 36 of the housing body 32 of the pump unit 13, which is the heat receiving member, is thermally connected with the IC chip 24 of the CPU 22 such that heat conduction is ensured. That is, the heat that is generated and released from the IC chip 24 is transferred to the metallic portion of the outer circumference, namely the outer surface 36 of the housing body 32 of the pump unit 13.

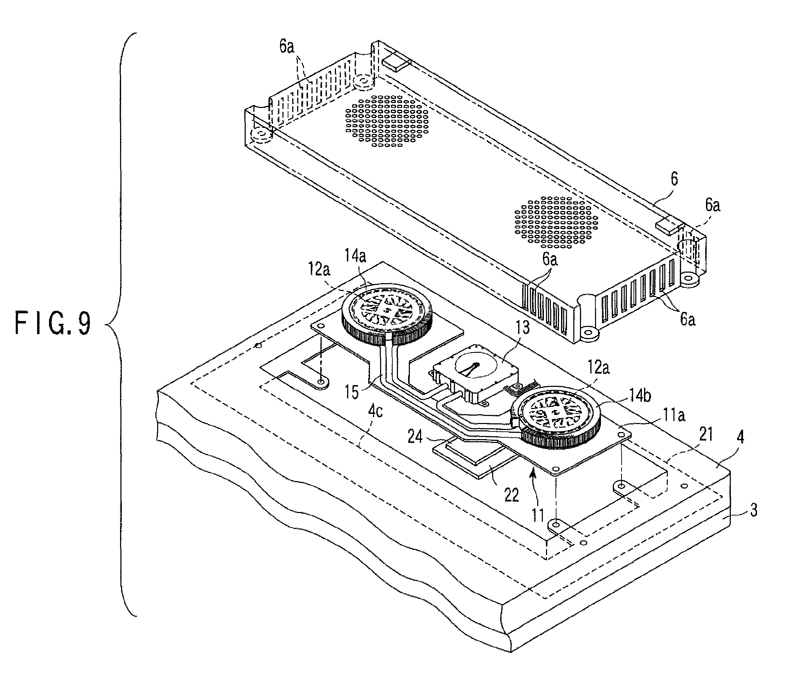

To install the above-described pump unit 13 and cooling device 11 in the casing 4, as shown in FIG. 9, the cooling device 11 is set in the opening 4d formed in the back surface of the casing 4. At the time, the pump unit 13 is positioned in the vicinity of the IC chip 24 of the print circuit board 21 that is exposed in advance at a prescribed position in the casing 4. By fixing the pump unit 13 and the IC chip 24 in this state, into the boss portion 4c provided at a prescribed position in the casing 4 as described above, the outer surface 36 of the pump unit 13 thermally connects to the IC chip 24 so as to ensure heat releasing. By fixing the cooling portion cover 6 to a prescribed position on the casing 4 thereafter, the installation of the cooling device 11 is completed.

It is to be noted that the mount base 11a of the cooling device 11 may have the function of supplementing the rigidity and strength of the casing 4.

With reference to FIGS. 6, 7, 9 and 10, an exemplary operation of the cooling device 11 will be described below.

The heat from the IC chip of 9 is transferred to the pump housing 31 through the outer surface 36 of the housing body 32 of the pump unit 13. The heat transferred to the pump housing 31 is dispersed to the coolant, liquid, contained in the pump chamber 38 and the reserve tank 39 of FIG. 6, and thereby collected.

The operation of motor 46 of FIG. 6 is actuated simultaneously with the flow of current to the portable computer 1 accompanying with power on thereof. Then, the coolant contained in the pump chamber 38 and the reserve tank 39 of FIG. 6 circulates in the cooling circulation path 15. That is, as shown in FIG. 6 by supplying a prescribed amount of drive current from the drive circuit board 51 to the stator 48, torque is generated between the stator 48 and the magnet 49 of the rotor 47, and the rotor 47 rotates together with the impeller 44. As a result, the coolant in the pump chamber 38 of FIG. 6 is pressurized and a prescribed amount of coolant is supplied to the coolant circulation path 15 from the discharge tube 42.

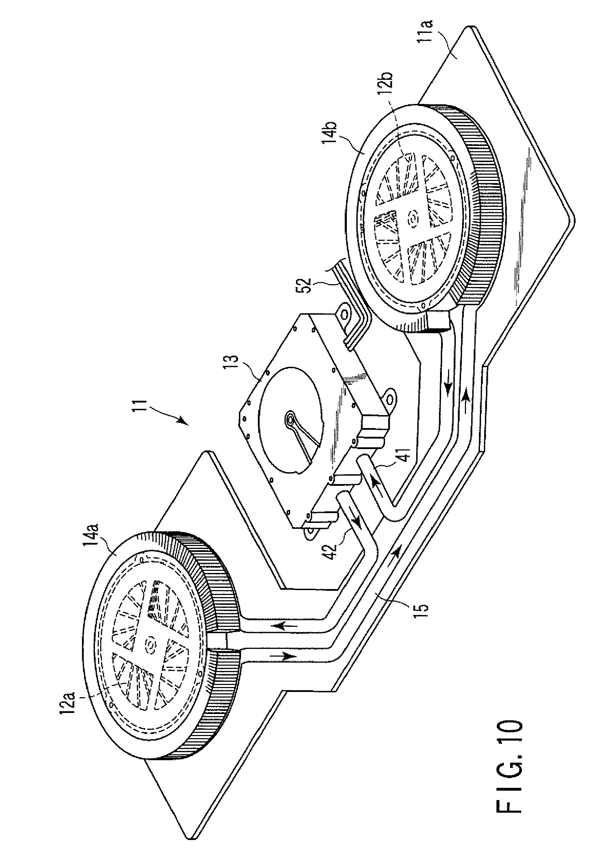

As shown in FIG. 10, the coolant that is supplied to the coolant circulation path 15 carries the heat transferred from the IC chip 24 of FIG. 9, and is cooled by airflow from the first fan 12a in the vicinity of the first heat radiation fins 14a. The coolant, which is cooled in the vicinity of the first heat radiation fins 14a, is cooled by airflow from the second fan 12b in the vicinity of the second heat radiation fins 14b through the coolant circulation path 15.

The airflow from the fans 12a and 12b respectively absorbs the heat of vaporization from the corresponding the first and second heat radiation fins 14a and 14b, and consequently, the temperature of the coolant flowing in the coolant circulation path 15 is reduced and then the airflow is blown out from almost the entire circumference of the first and second heat radiation fins 14a and 14b through the slit 6a in the front, rear and left and right walls of the cooling portion cover 6 as shown in FIG. 9, to the outside of casing 4 and the cooling portion cover 6. As a result, by cooling the coolant at a specific portion of the casing 4, or the cooling portion cover 6, undesired high temperature airflow, namely, remaining airflow whose temperature is high, is reduced.

That is, by making it possible ensure cooling of the IC chip 24 that is a heat generating element, the characteristics of the IC chip 24 may be prevented from becoming unstable, and operational defects may be prevented. It is to be noted that the airflow which is absorbed by the heat of vaporization from the respective first and second heat radiation fins 14a and 14b of the cooling device 11 is discharged substantially parallel to the width direction of the casing 4 via the cooling portion cover 6 in a state in which it protrudes beyond the bottom portion of the casing 4. Thus, even in the case where the portable computer 1 is used under conditions where the surface 111 such as a desk, referring to FIG. 2, is close contact with the bottom portion of the case 4, the airflow may not be obstructed by the surface 111 to decrease cooling efficiency.

The coolant in the coolant circulation path 15, which passes the vicinity of the first and second heat radiation fins 14a and 14b, is sequentially cooled down, and returned to the reserve tank 39 via the space 43 of FIG. 7 in the pump unit 13 by pressure from the coolant that is sequentially sent from the pump chamber 38. As a result, even if air bubbles are generated in the coolant which flows in the coolant flow path 15, the air bubbles are separated and removed from the coolant in the reserve tank 39.

Next, the coolant that is returned to the reserve tank 39 is guided to the pump chamber 38 via the channel 40, and re-pressurized and sent to the coolant circulation path 15. In this manner, heat from the IC chip 24 or the other heat generating element that is received at the outer surface 36 of the pump unit 13 is sequentially discharged by airflow from the fan provided corresponding to the vicinity of the first and second heat radiation fins 14a and 14b using the coolant circulated by the pump unit 13.

In this manner, the temperature increase of the IC chip 24 or the other heat generating element, is maintained such that the temperature may be within a prescribed permissible range. It is to be noted that because the coolant circulation path 15 is thermally connected to the mount base 11a, which is made of a metal that is effective in radiating heat, the temperature of the coolant flowing in coolant circulation path 15 is also lowered and cooled while being circulated in the coolant circulation path 15.

It is to be noted that the present invention is not to be limited by the above-described embodiment, and various modification may be made within the scope of the invention. For example, in the above-described embodiment, there are two sets of the heat radiation fins and the fan on either side of the pump unit, but three sets or more may be provided. In the case where there are three or more sets, the third set of heat radiation fins and the fan may be integrally provided with the pump unit.

In addition, coolant circulation path which contacts, or is in the vicinity of the heat radiation fins may be at the inner diameter side or the outer diameter side of the heat radiating body of the heat radiation fins, and may be arranged around two or more circumferences.

Also, a heat receiving member may be arranged separately from the pump unit 13. In other words, the cooling device 11 may have independent heat receiving member at some portion in the coolant circulation path 15, for example between the pump unit 13 and the first cooling mechanism.

Furthermore, the coolant circulation path may have joints at suitably selected positions.

## Claims

1. A cooling device (1), **characterized by** comprising:
a heat receiving member (11a) to receive heat from a heat generating element;
a circulation path (15) thermally coupled to the heat receiving member, the circulation path routing coolant heated by the heat receiving member;
a pump unit (13) to circulate the coolant routed over the circulation path;
a first heat radiation mechanism (14a) having a first heat radiation member thermally coupled to the circulation path, and a first fan (12a) to send air toward the first heat radiation member; and
a second heat radiation mechanism (14b) having a second heat radiation member thermally coupled to the circulation path, and a second fan (12b) to send air toward the second heat radiation member.

2. A cooling device according to claim 1, **characterized in that** the heat receiving member (11) is formed in an outer surface of the pump unit.

3. A cooling device according to claim 1, **characterized by** further comprising a supporting member (11a) on which the first heat radiation mechanism and the second heat radiation mechanism are mounted.

4. A cooling device according to claim 3, **characterized in that** the circulation path includes a first flow path (15) between the first heat radiation member and the second heat radiation member, the first flow path being supported by the supporting member.

5. A cooling device according to claim 4, **characterized in that** the circulation path (41, 42) includes a second flow path coupling the pump unit to the first heat radiation member and the second heat radiation member.

6. A cooling device according to claim 5,
**characterized in that** at least one portion of the second flow path is deformable.

7. A cooling device according to claim 3, **characterized in that** the supporting member (11a) transfers heat from the first heat radiation member and the second heat radiation member.

8. A cooling device according to claim 1, **characterized in that** the pump unit is disposed between the first heat radiation mechanism and the second heat radiation mechanism.

9. A cooling device according to claim 1, **characterized in that** a center (45) of the pump unit (13) is offset in a planar direction with respect to a line intersecting a center of the first heat radiation mechanism and a center of the second heat radiation mechanism.

10. A cooling device according to claim 1, **characterized in that** the pump unit (13) includes a discharge port from which the coolant is discharged, and a center of the discharge port is offset in an orthogonal direction with respect to a line intersecting a center of the first heat radiation mechanism and the second heat radiation mechanism.

11. A cooling device according to claim 1, **characterized in that** the first heat radiation member (14a) includes a plurality of fins surrounding the first fan, and the second heat radiation member (14b) includes a plurality of fins surrounding the second fan.

12. An electronic apparatus (1), **characterized by** comprising:
a housing (4) in which a heat generating element is arranged; and
a cooling device (11a) to radiate heat generated by the heat generating member, the cooling device includes
(1) a heat receiving member (36) to receive heat from a heat generating element,
(2) a circulation path (15, 42, 42) thermally coupled to the heat receiving member, the circulation path carrying coolant heated by the heat receiving member,
(3) a pump unit (13) to circulate the heated coolant inside the circulation path,
(4) a first heat radiation mechanism (14a) having a first heat radiation member thermally coupled to the circulation path, and a first fan to send air toward the first heat radiation member, and
(5) a second heat radiation mechanism (14b) having a second heat radiation member thermally coupled to the circulation path, and a second fan to send air toward the second heat radiation member.

13. An electronic apparatus according to claim 12, **characterized in that** the heat receiving member (36) of the cooling device is formed in an outer surface of the pump unit (13).

14. An electronic apparatus according to claim 12, **characterized in that** the circulation path (15, 41, 42) includes a first flow path between the first heat radiation member and the second heat radiation member, the first flow path being supported by a supporting member on which the first heat radiation mechanism and the second head radiation mechanism are mounted.

15. An electronic apparatus according to claim 14, **characterized in that** the circulation path further includes a second flow path (41, 42) coupling the pump unit to the first heat radiation member and the second heat radiation member.

16. An electronic apparatus according to claim 12, **characterized in that** the pump unit (13) of the cooling device is disposed between the first heat radiation mechanism and the second heat radiation mechanism.

17. An electronic apparatus according to claim 12, **characterized in that** a center (45) of the pump unit (13) of the cooling device is offset in a direction with respect to a line intersecting a center of the first heat radiation mechanism and a center of the second heat radiation mechanism.

18. An electronic apparatus according to claim 12, **characterized in that** the pump unit (13) including a discharge port from which the coolant is discharged, and a center of the discharge port is offset in an orthogonal direction with respect to a hypothetical line crossing a center of the first heat radiation mechanism and the second heat radiation mechanism.

19. An electrical apparatus according to claim 12, **characterized in that** the pump unit (13) of the cooling device is disposed between the first heat radiation mechanism and the second heat radiation mechanism.

20. A cooling device (11), **characterized by** comprising:
a heat receiving member (36) adapted to heat coolant routed over a conduit;
a pump unit (13) to circulate the coolant routed through the conduit;
a first heat radiation mechanism (14a) including a first heat radiation member thermally coupled to the conduit, and a first fan to send air toward the first heat radiation member; and
a second heat radiation mechanism (14b) including a second heat radiation member thermally coupled to the conduit, and a second fan to send air toward the second heat radiation member.
